# EUROPÄISCHE PATENTANMELDUNG

(11) **EP 3 889 385 A1**
(43) Veröffentlichungstag der Anmeldung: **06.10.2021**
(21) Anmeldenummer: 21163578.4
(22) Anmeldetag: 19.03.2021
(51) Int. Cl.: E06B 3/30, E06B 3/22, B29C 48/11, B29C 48/00

(54) **PROFIL FÜR EIN FENSTER- UND/ODER TÜRTEIL MIT METALLLAGE MIT FASERLAGE**

(30) Priorität: 27.03.2020 DE 102020108568
(71) Anmelder: Salamander Industrie-Produkte GmbH, 86842 Türkheim (DE)
(72) Erfinder: Schmiedeknecht, Till, 80992 München (DE)
(74) Vertreter: Schmid, Nils T.F.

(57) **Zusammenfassung**

Die vorliegende Erfindung betrifft ein Profil (1), insbesondere Extrusionsprofil, wie Mono- oder Ko-Extrusionsprofil, für ein Tür- und/oder Fensterteil, umfassend eine mittels eines Klebstoffs zumindest teilweise auf eine Außenseite des Profils aufkaschierte Faserlage (6).

## Beschreibung

Die vorliegende Erfindung betrifft ein Profil, insbesondere ein Extrusionsprofil, wie ein Mono- oder Koextrusionsprofil, für ein Fenster- und/oder Türteil, insbesondere ein Fenster- und/oder Türrahmenteil oder ein Fenster- und/oder Türflügelteil, sowie ein Verfahren zum Herstellen eines derartigen Profils.

Im Stand der Technik ist es bekannt, die Attraktivität von Tür- und/oder Fensterrahmen dadurch zu erhöhen, die sichtbaren Außen- oder Innenseiten der Rahmen mit einer Kunststoff-Folie zu kaschieren, welche beispielsweise ein Holzaussehen, ein betonartiges Aussehen oder ähnliches imitieren soll. Der Einsatz von Kunststoff ist heutzutage zunehmend in den meisten Branchen verpönt. Es besteht daher grundsätzlich die Nachfrage nach umweltschonenderen Produkten. Gleichzeitig steigt die Nachfrage nach kundenspezifischen, individualisierten Tür- und/oder Fensterrahmenteilen.

Es ist Aufgabe der vorliegenden Erfindung, die Nachteile des Standes der Technik zu überwinden, insbesondere die Herstellung von individualisierten und/oder umweltschonenden Profilen für Fenster- und/oder Türrahmenteile oder Fenster- und/oder Türflügelteile zu vereinfachen.

Die Aufgabe wird durch die Gegenstände der unabhängigen Ansprüche gelöst.

Danach ist ein Profil für ein Fenster- und/oder Türteil, beispielsweise ein Tür- und/oder Fensterrahmenteil oder ein Tür- und/oder Fensterflügelteil, vorgesehen. Bei dem Profil kann es sich beispielsweise um ein insbesondere aus Kunststoff, wie PVC, hergestelltes Profil, insbesondere Extrusionsprofil, beispielsweise ein Monoextrusionsprofil oder ein Ko-Extrusionsprofil, handeln. Gattungsgemäße Profile können beispielsweise durch Strangziehen oder im Extrusionsverfahren hergestellt werden. Im Rahmen der vorliegenden Erfindung sind die Begriffe Extrusionsprofil, Monoextrusionsprofil bzw. Koextrusionsprofil so zu verstehen, dass das entsprechende Profil durch Extrusion, Monoextrusion bzw. Koextrusion hergestellt ist. Beim Extrusionsverfahren kann es sich um eine Monoextrusion oder eine Koextrusion handeln.

Das erfindungsgemäße Profil kann beispielsweise wenigstens abschnittsweise ein Tür- und/oder Fensterteil bilden, wie beispielsweise einen Holm, wie einen Vertikalholm oder einen Horizontalholm, entweder eines feststehenden Tür- und/oder Fensterrahmenteils oder eines bewegbaren, insbesondere verschiebbaren und/oder verschwenkbaren, Tür- und/oder Fensterflügelteils. Für den Fall, dass das Profil als Kunststoff-Extrusionsprofil ausgebildet ist, umfasst das Profil zunächst ein durch Extrusion hergestelltes Extrusionshalbzeug, das entlang der Extrusionsrichtung einen im Wesentlichen identischen Querschnitt sowie eine im Wesentlichen identische Außenabmessung besitzt.

Erfindungsgemäß umfasst das Profil eine mittels eines Klebstoffs zumindest teilweise auf eine Außenseite des Profils, insbesondere auf einen eine Außenseite des Profils bildenden und/oder nach außen gewandten Profilsteg, aufkaschierte Faserlage. Bei den die Faserlage bildenden Fasern kann es sich im Rahmen der vorliegenden Erfindung um ein lineares, längliches Gebilde mit einer Querschnittsform handeln, die rund, eckig, oder dergleichen ist, und im Verhältnis zu ihrer Länge dünn und flexibel ausgebildet ist. In der Regel kennzeichnen sich Fasern dadurch aus, dass sie in Längsrichtung keine Druckkräfte aufnehmen können, sondern nur Zugkräfte. Unter Kaschieren wird im Allgemeinen das Verbinden mehrerer Lagen mit Hilfe eines Kaschiermittels, das gemäß der vorliegenden Erfindung wenigstens einen Klebstoff umfasst, verstanden. Das Aufkaschieren der insbesondere dünnen und/oder flexiblen Faserlage hat sich als besonders vorteilhaft im Hinblick auf die Herstellung erwiesen, da zum einen die Faserlagen auf einfache und platzsparende Weise bevorratet werden können, beispielsweise durch Aufwickeln auf eine Bevorratungsrolle, und zum anderen sich der Kaschierprozess überraschenderweise nicht nur für Kunststofffolien, sondern auch für Faserlagen gut eignet. Die flexible Faserlage ist zu einem gewissen Maße elastisch dehnbar beziehungsweise biegbar, insbesondere derart, dass sie auf einfache Weise auch an nicht ebene Profilflächen aufgebracht und diesbezüglich formangepasst werden kann. Eine Faserlage kann gemäß der vorliegenden Erfindung dann als flexibel verstanden werden, wenn diese insbesondere zur Bevorratung auf eine Rolle aufgewickelt beziehungsweise aufgerollt werden kann. Die dünnen Faserlagen sich diese besonders formanpassend und formgetreu an selbst unregelmäßige Profilaußenseiten anschmiegen und aufkaschieren, sodass eine gleichmäßige, langfristig haltbare und passgenaue Kaschierung der entsprechenden Profilaußenseite gewährleistet werden kann. Ein weiterer Vorteil besteht darin, dass die Faserlage in Bezug auf die zu kaschierende Fläche der Außenseite des Profils nicht exakt bemessen sein muss, sondern durchaus größer bemessen sein darf, da diese mittels einfacher Nachbearbeitungsschritte, wie ein Besäumen, abgetrennt werden kann. Das Aufkaschieren der Metalllage im Gegensatz zum nachträglichen Aufstecken hat ferner den herstellungstechnischen Vorteil dahingehend, dass der Kaschierprozess unmittelbar in den Extrusionsprozess integriert werden kann.

In einer beispielhaften Ausführung des erfindungsgemäßen Profils umfasst die Faserlage wenigstens 50%, insbesondere wenigstens 60%, 70%, 80% oder wenigstens 90%, Naturfasern oder ist zu wenigstens 50%, insbesondere wenigstens 60%, 70%, 80% oder wenigstens 90% aus nachwachsenden Rohstoffen hergestellt. Als Naturfasern werden alle Fasern verstanden, die von natürlichen Quellen, wie Pflanzen, Tieren oder Mineralien, stammen und/oder ohne weitere chemische Zusätze vorliegen. Des Weiteren kann die Faserlage zu wenigstens 50%, insbesondere wenigstens 60%, 70%, 80% oder wenigstens 90%, aus nachwachsenden Rohstoffen hergestellt sein. Beispielsweise handelt es sich bei den Fasern um Regeneratfasern, die aus natürlich vorkommenden, nachwachsenden Rohstoffen über chemische Prozesse hergestellt werden, beispielsweise auf Zellulose-Basis.

Gemäß einer beispielhaften Weiterbildung des erfindungsgemäßen Profils ist die Faserlage, insbesondere sind die Fasern der Faserlage, ausgewählt aus der Gruppe bestehend aus Textilfasern, Holzfasern, Lederfasern und Lederfaserstoffen. Beispielsweise ist die Textil-Faserlage zu einem flächigen textilen Gebilde, wie einem Vlies, einem Gewebe insbesondere in Leinwandbindung, einem Gewirke, einem Gestricke, einem Geflechte und/oder Filz, geformt. Bei den Textilien kann es sich beispielsweise um gewobene Baumwolle, Samt, bedruckte Baumwolle, Katun, Satin, Seide, Sackleinen oder ähnliches handeln. Beispielsweise kann das Textil zu 100 % aus Polyester bestehen und/oder gewebt sein und/oder wenigstens einseitig pigmentiert sein und/oder mit einer PUR-Beschichtung versehen sein. Als besonders bevorzugt insbesondere in Bezug auf eine Nachbearbeitung hat sich die Leinwandbindung erwiesen. Beispielsweise können gängige Outdoor-Stoffe eingesetzt werden. Die Leinwandbindung hat sich als besonders vorteilhaft erwiesen, da auf diese Weise hergestelltes Gewebe beim ggf. notwendigen Besäumen in der Kaschierung und/oder beim Fräsen des Profils bei einem Fensterhersteller am wenigstens zum Ausfransen neigt.

Holzfasern sind im Allgemeinen langgestreckte, länglich angeordnete Holzzellen, die der Festigung des Holzes dienen und durch mechanische Zerfaserung aus Holz gewonnen werden können, auch Holzstoffe genannt. Die Holzfasern bzw. Holzstoffe können in Form eines Furniers von beispielsweise einer Dicke im Bereich von 0,5 mm bis 8 mm weiterverarbeitet werden. Als Leder wird im Allgemeinen eine durch Gerbung chemisch haltbar gemachte Tierhaut bezeichnet, dessen natürliche Faserstruktur weitgehend erhalten ist. Lederfasern, die zu einem Lederfaserstoff weiterverarbeitet werden können, auch Lefa genannt, sind aus Chromfalzspänen und zerkleinerten pflanzlich gegerbten Lederresten, Naturlatex, natürlichen Fetten und Gerbstoffen hergestellt. Beispielsweise kann ein Lederfaserstoff der Anmelderin mit dem Namen Cabra verwendet werden. Der Lederfaserstoff kann einen Anteil am Gesamtgewicht in Bezug auf die Trockenmasse des gesamten Lederfaserstoffs von ca. 50 Gew.-% bis 85 Gew.-%, einem Binderanteil von 7 Gew.-% bis 40 Gew.-% und einen Anteil an Additiven, wie Pigmenten, Hilfsmitteln, etc. im Bereich von 0 Gew.-% bis 10 Gew.-% besitzen. Der Lederfaserstoff kann beispielsweise eine Materialfeuchte im Bereich von 8% bis 12% besitzen.

In einer weiteren beispielhaften Ausführung des erfindungsgemäßen Profils besitzen die Textilfasern eine fluidabweisende, insbesondere hydrophobe, und/oder partikelabweisende, insbesondere schmutz- und/oder staubpartikelabweisende, Eigenschaft. Als fluidabweisende bzw. partikelabweisende Eigenschaft wird im Allgemeinen eine Tendenz der Textil-Faserlage verstanden, Fluide, wie Wasser oder dergleichen, sowie Partikel aus der Umgebung zu blocken. Die fluidabweisende und/oder partikelabweisende Eigenschaft kann dazu führen, dass Fluid- und/oder Staubpartikel an der Textil-Faserlage wenigstens teilweise abperlen, insbesondere nicht in das Innere der Faserlage gelangen. Auf diese Weise kann ein dauerhaftes Anhaften von Partikeln an der Faserlage vermieden werden und eine Art Selbstreinigungseffekt generiert werden, der sich beispielsweise dadurch äußern kann, dass die Partikel vorzugsweise in Gravitationsrichtung von der Faserlage ablaufen, insbesondere abtropfen. Vorzugsweise ist die fluidabweisende, insbesondere hydrophobe, und/oder partikelabweisende, insbesondere schmutz- und/oder staubpartikelabweisende, Ausrüstung nur auf der der Verbindungs- bzw. Klebefläche gegenüberliegenden Außenseite vorgesehen, insbesondere um die Adhäsion zum Klebstoff aufgebaut nicht zu beeinträchtigen.

Als Maß für die fluidabweisende, insbesondere hydrophobe, Eigenschaft kann die freie Oberflächenenergie, die bei Flüssigkeiten, wie Wasser, zugleich die Oberflächenspannung ist, herangezogen werden. Beispielsweise kann der Kontaktwinkel, auch Rand- oder Benetzungswinkel genannt, zwischen Flüssigkeitspartikel, insbesondere Flüssigkeitstropfen, und Schichtoberfläche zur Bestimmung der Oberflächenenergie verwendet werden. Die Bestimmung der freien Oberflächenenergie und/oder des Kontaktwinkels kann beispielsweise anhand der Vorschrift DIN 5660-2 "Beschichtungsstoffe - Benetzbarkeit - Teil 2: Bestimmung der freien Oberflächenenergie fester Oberflächen durch Messung des Kontaktwinkels", die hierin unter Bezugnahme vollständig integriert ist, erfolgen. Dabei besteht folgender Zusammenhang: ein Kontaktwinkel von weniger als 90° deutet auf eine fluidphile, insbesondere hydrophile, Oberflächeneigenschaft hin; ein Kontaktwinkel von etwa 90° deutet auf eine indifferente Oberfläche in Bezug auf beispielsweise Hydrophobie hin; ein Kontaktwinkel von über 90° bedeutet gemäß der vorliegenden Erfindung eine fluidabweisende, insbesondere hydrophobe, Oberflächeneigenschaft, je nach dem, um welche Flüssigkeit es sich handelt. Zur Bestimmung der Oberflächenenergie anhand des Kontaktwinkels kann beispielsweise die in der Literatur bekannte Methode nach Owens-Wendt-Rabel-Kaeble (OWRK) angewendet werden. Schmutz- und/oder Staubpartikel weisen im Sinne der vorliegenden Erfindung gängige Partikel- oder Korngrößen auf, die beim Einsatz des Profils beispielsweise als Tür- und/oder Fensterteil einwirken können.

Gemäß einer beispielhaften Weiterbildung des erfindungsgemäßen Profils sind die Textilfasern einer die fluidabweisende und/oder partikelabweisende Eigenschaft von Textil verändernden Behandlung ausgesetzt.

In einer weiteren beispielhaften Weiterbildung des erfindungsgemäßen Profils ist die fluidabweisende und/oder partikelabweisende Eigenschaft durch Besprühen oder Beschichten, insbesondere Bedrucken der Textil-Faserlage insbesondere mit einer silan-basierten Lösung, wie einem handelsüblichen Hydrophobierungsmittel auf Silan-Basis, aufgebracht. Die fluidabweisende und/oder partikelabweisende Eigenschaft kann durch eine anorganische und/oder organische Oberflächenmodifikation der Faserlage bewirkt werden. Beispielsweise kann das Beschichtungsmittel mit Wasser oder organischen Lösungsmitteln, wie beispielsweise Alkohol, verdünnt werden, sodass insbesondere ein Mischungsverhältnis von 0,2% - 25% Beschichtungsmittel und 75% - 99,8% Wasser bzw. organisches Lösungsmittel enthalten ist, und kann ferner vor dem Beschichtungs-, Besprühungs- oder Bedruckungsprozess aktiviert werden. Beispielsweise kann die fluidabweisende und/oder partikelabweisende Eigenschaft derart aufgebracht werden, dass nach dem Beschichten, Besprühen oder Bedrucken die sogenannte Trägerflüssigkeit, d.h. das Wasser oder das organische Lösungsmittel, verdunstet, während das Beschichtungsmittel auf der Textil-Faserlage verbleibt. Beispielsweise handelt es sich bei der Beschichtung, Bedruckung oder Besprühung um eine Oberflächenmodifikation, die beispielsweise eine Veränderung der Einzelfaseroberfläche der Textilschicht hervorruft. Insbesondere kann das Besprühen, Beschichten oder Bedrucken makroskopisch als Art Imprägnierung verstanden werden. Gemäß einer beispielhaften Weiterbildung kann eine Eindringtiefe der fluidabweisenden und/oder partikelabweisenden Eigenschaft, vorzugsweise eine Beschichtungs-, Besprühungs- oder Bedruckungstiefe, mittels eines Anpressdrucks eines Bedruckungshilfsmittels, wie einer Druckwalze, zum Bedrucken der stromaufwärtigen Schicht einstellbar bzw. eingestellt sein.

Die Textil-Faserlage kann in einer beispielhaften Weiterbildung derart mit einer die fluidabweisenden und/oder partikelabweisenden Eigenschaft von Textil verändernden Behandlung ausgesetzt sein, sodass eine mit dem Profil zu verbindende, insbesondere zu verklebende, Verbindungs- oder Klebefläche der Textil-Faserlage frei von einer die fluidabweisenden und/oder partikelabweisenden Eigenschaft verändernden Behandlung ist. Dadurch kann sichergestellt werden, dass ein ausreichender Adhäsionsaufbau mit dem Klebstoff einhergehen kann und der Adhäsionsaufbau nicht durch beispielsweise eine Beschichtung beeinträchtigt wird. Beispielsweise kann vorgesehen sein, dass sich ein Gradient bezüglich der fluidabweisenden und/oder partikelabweisenden Eigenschaft ergibt, der sich ausgehend von einer der Klebefläche entgegengesetzten Außenseite der Textil-Faserlage beispielsweise kontinuierlich oder sprunghaft hin zu der Klebeseite verringert.

In einer weiteren beispielhaften Ausführung ist die Faserlage ein Lederfaserstoff, der einen Lederanteil im Bereich von 50 Gew.-%, insbesondere von 65 Gew.-%, bis 85 Gew.-% einen Binderanteil im Bereich von 7 Gew.-%, insbesondere von 10 Gew.-%, bis 40 Gew.-%, insbesondere bis 20 Gew.-%, und gegebenenfalls einen Anteil von wenigstens einem Additiv, wie ein Pigment, von höchstens 10 Gew.-% aufweist, bezogen auf eine Gesamttrockenmasse der Faserlage.

In einer beispielhaften Weiterbildung des erfindungsgemäßen Profils ist der Lederfaserstoff mit mindestens einer Pigmentierung versehen, welche mindestens ein lichtechtes Pigment umfasst. Das wenigstens eine lichtechte Pigment gewährleistet die Reflexion von Strahlung, insbesondere von UV-Strahlung, und verbessert so den Einbau des Profils als Tür- und/oder Fensterteil auch im Außenbereich. Im Sinne dieser Erfindung wird der Begriff "Lichtechtheit" als ein Maß für die Farbechtheit eines Materials, insbesondere eines Oberflächenmaterials, verwendet. Zur Bestimmung der Lichtechtheit wird analysiert, ob die Farben des Materials, insbesondere des Oberflächenmaterials, bei direkter oder indirekter Lichteinwirkung ausbleichen und/oder ihre Farbe ändern. Lichtechte Materialien, insbesondere Oberflächenmaterialien, verlieren auch bei direkter Sonneneinstrahlung nichts oder kaum etwas von ihrer Farbintensität. Besonders Sonnenlicht mit hohem UV-Lichtanteil hat auf viele Materialien, insbesondere Oberflächenmaterialien, eine zersetzende Wirkung, was zu sichtbaren Farbveränderungen führen kann. Derartige Farbveränderungen haben nicht nur ästhetische, sondern auch technische Nachteile.

Auf Extrusionsprofile, beispielsweise aus Kunststoff, für Fenster- und/oder Türteile, insbesondere Fenster- und/oder Türrahmenteile oder Fenster- und/oder Türflügelteile, wirken je nach Lichtart Ultraviolett (UV)-Strahlen und Infrarot (IR)-strahlen mit unterschiedlicher Intensität ein. Da derartige Extrusionsprofile dauerhaft den Witterungsbedingungen, insbesondere der UV-Strahlung, für lange Zeit ausgesetzt sind, können diese Strahlen im Laufe der Zeit Reaktionen im Kunststoffmaterial auslösen, die zu einer Versprödung und/oder einem Verblassen führen.

Die Lichtechtheit kann erfindungsgemäß durch jedes dem Fachmann geläufige Verfahren bestimmt werden. Beispielsweise kann die Lichtechtheit durch ein Belichtungsverfahren nach DIN 513: 1999-10 bestimmt werden, in dem die Farbtemperatur bei einer Gesamteinstrahlungsleistung von etwa 12 GJ/m² im Wellenlängenbereich von 300 nm bis 800 nm gemessen wird. Auf die einzelnen Schritte der Verfahren zur Bestimmung der Lichtechtheit und Wetterechtheit wird später in den Beispielen im Detail eingegangen.

In einer weiteren beispielhaften Ausführung der vorliegenden Erfindung weißt die Faserlage eine Dicke von weniger als 1,0 mm, insbesondere eine Dicke im Bereich von 0,05 mm bis 0,5 mm, auf. Die Faserlage aus Lederfaserstoff kann beispielsweise eine Lagendicke von etwa 0,35 mm, die Textil-Faserlage eine Dicke im Bereich von 0,1 mm bis 0,3 mm und die Holzfurnier-Faserlage eine Dicke im Bereich von 0,35 mm besitzen. Beispielsweise kann die Holzfurnier-Faserlage mit einer Gewebeschicht beschichtet sein. Beispielweise kann die Gewebeschicht als Haftgrund für die Verklebung dienen.

In einer weiteren beispielhaften Ausführung ist eine mit dem Profil zu verbindende, insbesondere zu verklebende, Verbindungsfläche, insbesondere Klebefläche, der Faserlage zumindest teilweise mit einem Lack beschichtet.

Ein Lack ist im Allgemeinen ein flüssiger oder auch pulverförmiger Beschichtungsstoff, der auf die Verbindungsfläche aufgetragen, beispielsweise aufgesprüht, aufgewalzt oder dergleichen ist, und einen in der Regel durchgehenden festen Film aus der Oberfläche ausbildet.

In einer beispielhaften Ausführung des erfindungsgemäßen Profils umfasst der Lack Polyestergelack, Epoxidharzlack, Alkydharzlack, Acryllack, PU-Lack und/oder eine PVDF-Beschichtung.

Gemäß einer beispielhaften Weiterbildung des erfindungsgemäßen Profils ist der Klebstoff ein insbesondere einkomponentiger Schmelzklebstoff, insbesondere auf PU-Basis. Des Weiteren kann eine Schichtdicke des Klebstoffs größer als 60 g/qm² betragen, insbesondere im Bereich von 80 g/qm² bis 100 g/qm² liegen. Die Schichtdicke kann ferner im Bereich von 80 g/qm² bis 100/qm² liegen. Bei dem Klebstoff kann es sich beispielsweise um einen sogenannten PUR-Hotmelt, insbesondere einen reaktiven PU-Hotmelt, der neben der Erstarrung beim Abkühlen, auch chemisch aushärtet, meist unter Einbeziehung von Feuchte und so eine höhere Adhäsion als ein reiner Heißkleber aufbaut, handeln. Derartige Schmelzklebstoffe, auch Heißklebstoffe, Heißkleber oder Heißleim genannt, sind in der Regel lösungsmittel- bzw. wasserfreie und bei Raumtemperatur in der Regel feste Klebstofftypen, die bei Erhitzung als viskose Flüssigkeit vorliegen und somit zuverlässig auf eine zu verklebende Klebefläche aufgetragen werden können und beim Abkühlen unter reversibler Verfestigung eine feste Verbindung zwischen den Klebepartnern herstellen. Diese Klebstoffarten umfassen in der Regel thermoplastische Polymere.

Insbesondere bei der Verwendung von einer Textil-Faserlage hat sich der Einsatz eines Lacks als vorteilhaft in Bezug auf die Nachbearbeitung sowie auch in Bezug auf das Ablängen der Textil-Faserlage herausgestellt. Die Textilfasern tendieren bei Aufbringung eines Lacks weniger stark zum Ausfransen, wenn es beispielsweise notwendig ist, die Textil-Faserlage zuzuschneiden und/oder Aussparungen für beispielsweise separate Tür- und/oder Fensterteile, wie Griffe, Beschläge oder dergleichen, auszusparen.

Gemäß einem weiteren Aspekt der vorliegenden Erfindung, der mit den vorhergehenden Aspekten und beispielhaften Ausführungen kombinierbar ist, ist ein Verfahren zum Herstellen eines insbesondere erfindungsgemäßen Extrusionsprofils bereitgestellt. Bei dem erfindungsgemäßen Verfahren wird mittels Extrusion, insbesondere mittels Co-Extrusion, beispielsweise aus Kunststoff, ein Extrusionshalbzeug hergestellt. Das Extrusionshalbzeug heißt in der Regel ein in Extrusionsrichtung gleichmäßige Dimensionierung und einen gleichen Querschnitt auf. Des Weiteren wird erfindungsgemäß mittels eines Klebstoffs zumindest teilweise auf eine Außenseite des Extrusionshalbzeugs eine Faserlage aufkaschiert. Das Verfahren kann dazu ausgebildet sein, ein Profil gemäß einem der beispielhaften Ausführungen bzw. Aspekte der vorliegenden Erfindung herzustellen.

Gemäß einem weiteren Aspekt der vorliegenden Erfindung, damit den vorhergehenden Aspekten und beispielhaften Ausführungen kombinierbar ist, ist ein Tür- und/oder Fensterteil, insbesondere ein vorzugsweise feststehendes Tür- und/oder Fensterrahmenteil oder ein vorzugsweise bewegliches Tür- und/oder Flügelteil bereitgestellt. Das erfindungsgemäße Tür- und/oder Fensterteil umfasst ein erfindungsgemäßes Profil. Des Weiteren kann vorgesehen sein, dass das Tür- und/oder Fensterteil ein mittels des erfindungsgemäßen Verfahrens hergestelltes Profil, insbesondere Extrusionsprofil umfasst.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: eine Querschnittsansicht eines PVC-Extrusionsprofils mit aufgesteckter Aluminiumblende gemäß Stand der Technik;
- Figur 2: eine bespielhafte Ausführung eines erfindungsgemäßen Profils in der Schnittansicht;
- Figur 3: eine schematische Darstellung einer beispielhaften Ausführung eines Verbindungsbereichs eines erfindungsgemäßen Profils; und

- Figur 4: eine schematische Darstellung eines Ausschnitts einer Herstellungsanlage für ein erfindungsgemäßes Profil.

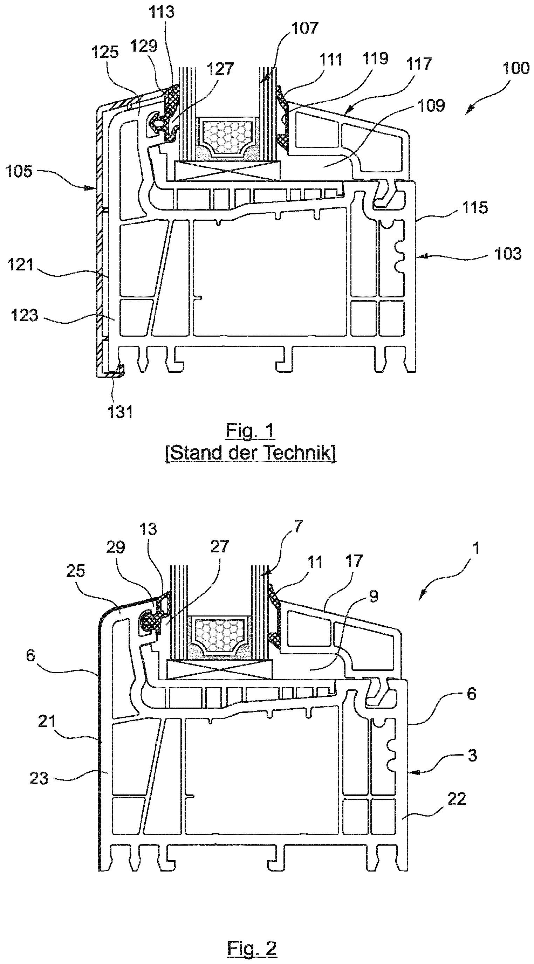

In Figur 1 ist ein Kunststoff-Extrusionsprofil, das im Allgemeinen mit der Bezugsziffer 100 versehen ist, in Schnittansicht dargestellt, auf das eine Aluminiumblende 105 an einer dem Gebäudeinnenraum abgewandten Außenseite aufgesteckt ist, um zum einen dem Kunststoff-Extrusionsprofil eine Aluminiumoptik zu verleihen und andererseits das Kunststoff-Extrusionsprofil mittels der Aluminiumblende vor Witterungseinflüssen zu schützen. Eine Verglasung 107 ist in eine Aufnahme 109 eingesetzt und mittels zwei Dichtelementen 111, 113 beidseitig der Verglasung 107 gegenüber den angrenzenden Profilteilen des Extrusionsprofils 100 abgedichtet. Das Extrusionsprofil 100 gemäß Figur 1 ist mehrteilig aufgebaut und weist neben einer Profilbasis 115 ein dem Gebäudeinneren zugewandtes Blendprofil 117 auf, welches zum einen mit der Profilbasis 115 formschlüssig verbunden ist und das eine Dichtfläche 119 besitzt, an welcher eine Dichtung 111 befestigt ist zur Abdichtung gegenüber der Verglasung 107. Die Profilbasis 115 besitzt in der Schnittansicht eine im Wesentlichen L-förmige Außenkontur, sodass zur Außenseite hin die Profilbasis 115 mit der Verglasung 107 überlappt, wobei der Überlappungsbereich mit einer Dichtung 113, der sogenannten Verglasungsdichtung 113, belegt ist, um die Verglasung 107 beidseitig abzudichten. Eine dem Gebäudeinneren abgewandten Extrusionsprofilaußenseite 121 ist durch einen im Wesentlichen sich gradlinig erstreckenden Profilaußensteg 123 konstanter Wandstärke gebildet, welcher einstückig in einen zu dem Profilaußensteg 21 geneigt angeordneten Dichtsteg 125 übergeht, der sich in Richtung Verglasung 107 zur Begrenzung eines abzudichtenden Dichtungsspalts 127 erstreckt.

Die Aluminiumblende 105 ist an eine Form des Profilaußenstegs 123 und des Dichtstegs 125 angepasst, sodass die Aluminiumblende 105 das extrudierte KunststoffProfil 103 zur Außenseite hin vollständig bedeckt. Im Bereich der Verglasung 107 ist der Dichtungsspalt 127 gebildet zwischen einem angewinkelten Endabschnitt 129 der Aluminiumblende 105 und der flächigen Erstreckung der Verglasung 107. In diesem Bereich ist eine speziell für das Extrusionsprofil 103 gebildete Verglasungsdichtung 113 eingesetzt. Im Vergleich zu Kunststoff-Extrusionsprofilen ohne Aluminiumblende 105 ist die Verglasungsdichtung 113 abgewandelt worden, um die sich ergebende unterschiedliche Dichtspalt-Abmessung 127 abdichten zu können.

An dem anderen Ende 131 der Aluminiumblende 105 weist die Aluminiumblende 105 einen im Querschnitt U-förmigen Endabschnitt auf, der so um ein Ende des Profilaußenstegs 123 herum angeordnet ist. Durch die angewinkelten Enden 129, 131 ist die Aluminiumblende 105 formschlüssig an dem Kunststoff-Extrusionsprofil 103 befestigt, nämlich aufgesteckt und aufgeklipst.

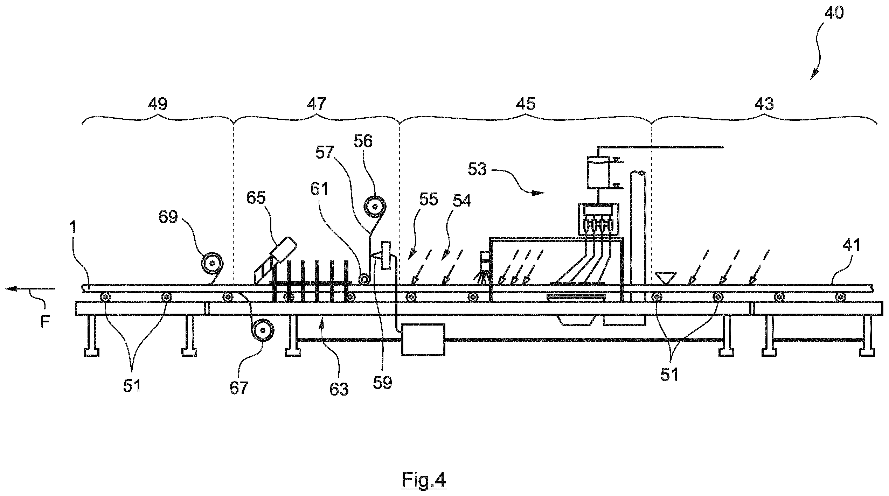

Unter Bezugnahme auf Figur 2 wird ein Ausführungsbeispiel eines erfindungsgemäßen Profils, das im Allgemeinen mit der Bezugsziffer 1 versehen ist, beschrieben. Zur Vermeidung von Wiederholungen werden gleiche Komponenten mit der gleichen Begrifflichkeit versehen, wobei die Bezugszeichen um 100 reduziert sind. In den beispielhaften Ausführungen erfindungsgemäßer Profile 1 der Figuren 2 bis 6 handelt es sich beispielhaft um Extrusionsprofile 1 aus Kunststoff, insbesondere PVC, die mittels Extrusion hergestellt sind. Die Extrusion kann mittels Mono- oder Ko-Extrusion erfolgen.

Im Unterschied zu der aufgesteckten und verrasteten Aluminiumblende 105 ist auf den dem Gebäudeinneren abgewandten Profilaußensteg 23 eine Faserlage 6, beispielsweise aus Textil, Holzfunier oder Lederfaserstoff, aufkaschiert. Die Faserlage 6 besitzt eine Schichtdicke von weniger als 1,0 mm, die entlang ihrer Längserstreckung konstant und aufgrund der dünnen Dimensionierung flexibel ist. Dabei ist klar, dass die Faserlage 6 auch auf einen innenseitigen, dem Profilaußensteg 23 gegenüberliegenden Profilinnensteg 22 aufkaschiert sein kann bzw., dass dieser zusätzlich mit einer Faserlage 6 kaschiert sein kann, um auch innenseitig dem Extrusionsprofil 3 eine gewünschte Optik zu verleihen. Auf den Herstellungsprozess wird später im Detail eingegangen. Der Vorteil des Aufkaschierens der Faserlage 6 ist insbesondere, dass zum einen die Faserlage 6 unmittelbar auf dem Extrusionsprofil 1 anliegt, sodass eine besonders kompakte Struktur gegeben ist. Des Weiteren kann die Faserlage 6 so bemessen sein, dass diese im Wesentlichen ausschließlich den sichtbaren Bereich der entsprechenden Profilstege 23, 22 des Extrusionsprofils 3 abdeckt. Es ist nicht notwendig, dass die Faserlage 6 beispielsweise im Bereich der Verglasung in den Dichtungsspalt 27 hineinragt, beispielsweise um eine Befestigung zu gewährleisten wie es bei der Aluminiumblende 105 der Fall ist. Gleiches gilt für das andere Ende des Profilaußenstegs 23, den die Faserlage 6 nicht umgreifen muss. Im Bereich der Verglasung 7 wirkt sich dies besonders vorteilhaft aus, da auf die standardmäßigen Verglasungsdichtungen 13 zurückgegriffen werden kann, sodass keine eigenen Fertigungen für die Verglasungsdichtung 113, wie beispielsweise bei dem Einsatz der Aluminiumblende 105, notwendig sind. Die Befestigung mittels Kaschieren ist deutlich stärker und damit langlebiger als bei der Stand der Technik-Verklipsung von beispielsweise zusätzlichen Aluminiumblenden 105.

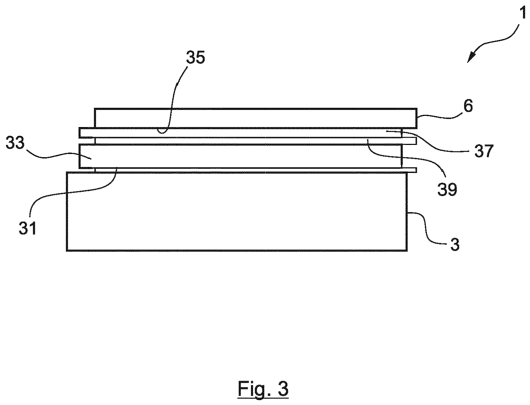

In Figur 3 ist ein beispielhafter schematischer Ausschnitt eines erfindungsgemäßen Extrusionsprofils 1 gezeigt, wobei der Verbindungsbereich zwischen Faserlage 6 deutlich vergrößert und schematisch abgebildet ist. Der sich ergebende Schichtaufbau wird nun jeweils beginnend von unten nach oben beschrieben. Auf das Kunststoff-Extrusionsprofil 3 wird zunächst ein sogenannter Primer 31 aufgebracht, der ein besonders gutes Anhaften des darauffolgenden Klebstoffs 33 gewährleistet. Die Faserlage 6 kann zumindest auf der dem Kunststoff-Extrusionsprofil 3 zugewandten Verbindungsfläche 35 zumindest teilweise mit einem Haftgrund 37 beschichtet sein. In Figur 3 ist zusätzlich zu sehen, dass zwischen Haftgrund 37 und der Klebstoffschicht 33 ein optionaler Lack 39, wie ein Decklack oder ein Klarlack, eingebracht sein kann. Beispielsweise bei Faserlagen 6 aus Textil hat sich durch den Einsatz einer Lackschicht 39 beispielsweise aus Acryl, Polyester, Epoxidharz oder ein PU-Lack als vorteilhaft erwiesen, dass die Fräseignung deutlich erhöht werden kann, was beim Ablängen der Textil-Faserlagen 6 und/oder beim Ausfräsen von Öffnungen (nicht dargestellt) beispielsweise für Fenstergriffe oder Beschläge oder Ähnliches von Vorteil ist. Das mit dem Lack 39 beschichtete Textil franzt nicht mehr so leicht aus, sodass die Qualität der Textil-Faserlage 6 deutlich erhöht ist.

In Bezug auf Figur 5 ist der Herstellungsprozess zum Herstellen eines erfindungsgemäßen Extrusionsprofils 1 und insbesondere zum Kaschieren von Faserlagen 6 schematisch dargestellt und wird im Folgenden näher erläutert: Figur 6 zeigt einen Ausschnitt einer Fertigungsanlage 40 zum Herstellen eines erfindungsgemäßen Extrusionsprofils 1, in den ein durch ein Extrusionswerkzeug (nicht dargestellt) hergestelltes Extrusionshalbzeug 41 gefördert wird (in der Abbildung von rechts). Grundsätzlich ist die Kaschieranlage 40 in folgende Stationen unterteilt: Einlaufbereich 43, Primer Bereich 45, Umlegebereich 47 und Auslaufbereich 49. Grundsätzlich wird das Extrusionshalbzeug 41 und das später fertiggestellte Extrusionsprofil 1 durch die Kaschieranlage 40 mittels einer Vielzahl von Förderwalzen 51 in Extrusionsprofillängsrichtung entsprechend einer Förderrichtung F gefördert. In dem Einlaufbereich 43 wird das Extrusionshalbzeug 41 im Wesentlichen mit einer Profiltemperatur im Bereich von 18°C bis 25°C angeliefert. In dem Primerbereich 45 befindet sich eine Primer-Station 53 zum gleichmäßigen und vollflächigen Auftragen des Primers auf die mit der Faserlage 6 zu kaschierenden Extrusionsprofilseite, die beispielsweise eine Innen- oder eine Außenseite 22, 23 des fertigen Fensters oder der fertigen Tür sein kann. Zwischen dem Primer-Bereich 45 und dem Umlegebereich 47 ist ein Einwirk- und Trockenabschnitt 54 für den Primer vorgesehen.

In dem Umlegebereich 47 ist die aufzukaschierende Lage, insbesondere Faserlage 6 beispielsweise aus Textil, Holzfurnier oder Lederfaserstoff, auf einer Walze 56 gelagert. Von der Walze 46 wird dann fortwährend im Wesentlichen synchron und/oder abgestimmt auf die Förderung F des Extrusionshalbzeugs 41 ein Strang 57 der aufzukaschierenden Faserlage 6 abgerollt und einseitig auf einer Kaschierfläche mit Klebstoff beschichtet, welcher mittels einer Düse 59 stromaufwärts einer Kaschierwalze 61, welche die Faserlage 6 auf das Kunststoff-Extrusionsprofil 3 aufdrückt, aufgebracht wird.

Im Gegensatz zur Stand der Technik-PVC-Folien-Kaschierung auf Kunststoff-Extrusionsprofile wurde herausgefunden, dass die Klebstoffmenge zur Verbesserung der Klebewirkung bei Faserlagen deutlich erhöht werden muss und insbesondere Klebstoffmengen im Bereich von 80 g/m² notwendig sind. Des Weiteren erfolgt unmittelbar vor der Klebstoffaufbringung eine Vorwärmung der Faserlage 6, wobei sich herausgestellt hat, dass deutlich höhere Temperaturen notwendig sind, die beispielsweise im Bereich von 70°C bis 120°C liegen. Für eine gute Anhaftung ist identifiziert worden, dass im Bereich der Kaschierwalze 61 eine Temperatur von min. 55°C gehalten werden muss. Optional kann an die Kaschierwalze 61 ein Heißluftgebläse oder ein anderweitiger Wärmeluftgenerator 63 anschließen.

Mittels einer Abtrenneinrichtung 65 kann eine Besäumung erfolgen. Anschließend kann insbesondere im Bereich des Profilauslaufs 49 ein weiterer Auftrag von Schutzfolien erfolgen, welche von jeweiligen Walzen 67, 69 bereitgestellt werden auf die Ober- und Unterseite 22, 23 des erfindungsgemäßen Extrusionsprofils 1 aufgebracht werden. Dies kann durch einen auf den Schutzfolien aufgebrachten Klebstoff erfolgen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Profil
- 3: Profilhalbzeug
- 6: Faserlage
- 7: Verglasung
- 9: Aufnahme
- 11, 13: Verglasungsdichtung
- 15: Profilbasis
- 17: Blendprofil
- 19: Dichtfläche
- 21: Profilaußenseite
- 23: Profilaußensteg
- 25: Dichtsteg
- 27: Dichtungsspalt
- 29, 31: Ende
- 31: Primer
- 33: Klebstoff
- 35: Verbindungsfläche
- 37: Haftvermittler
- 39: Lack
- 41: Extrusionshalbzeug
- 43: Einlaufbereich
- 45: Primerbereich
- 47: Umlegebereich
- 49: Auslaufbereich
- 51: Förderwalze
- 53: Primer-Station
- 54: Einwirk- und Trockenabschnitt
- 56: Walze
- 57: Strang
- 59: Düse
- 61: Kaschierwalze
- 63: Wärmeluftgenerator
- 65: Abtrennabrichtung
- 67, 69: Walze
- 100: Kunststoff-Extrusionsprofil
- 103: Extrusionshalbzeug
- 105: Aluminiumblende
- 107: Verglasung
- 109: Aufnahme
- 111, 113: Dichtelement
- 115: Profilbasis
- 117: Blendprofil
- 119: Dichtfläche
- 121: Extrusionsprofilaußenseite
- 123: Profilaußensteg
- 125: Dichtsteg
- 127: Dichtungsspalt
- 129, 131: Ende

## Patentansprüche

1. Profil (1), insbesondere Extrusionsprofil, wie Mono- oder Ko-Extrusionsprofil, für ein Tür- und/oder Fensterteil, umfassend eine mittels eines Klebstoffs (33) zumindest teilweise auf eine Außenseite des Profils aufkaschierte Faserlage (6).

2. Profil (1) nach Anspruch 1, wobei die Faserlage (6) wenigstens 50 %, insbesondere wenigstens 60 %, 70 %, 80 % oder wenigstens 90 %, Naturfasern umfasst oder zu wenigstens 50 %, insbesondere wenigstens 60 %, 70 %, 80 % oder wenigstens 90 %, aus nachwachsenden Rohstoffen hergestellt ist.

3. Profil (1) nach Anspruch 1 oder 2, wobei die Faserlage (6) ausgewählt ist aus der Gruppe bestehend aus Textilfasern, Holzfasern, Lederfasern und Lederfaserstoffen.

4. Profil (1) nach Anspruch 3, wobei die Textilfasern eine fluidabweisende, insbesondere hydrophobe, und/oder partikelabweisende, insbesondere schmutz- und/oder staubpartikelabweisende, Eigenschaft besitzen.

5. Profil (1) nach Anspruch 3 oder 4, wobei die Textilfasern einer die fluidabweisende und/oder partikelabweisende Eigenschaft von Textil verändernden Behandlung ausgesetzt sind.

6. Profil (1) nach einem der Ansprüche 3 bis 5, wobei die fluidabweisende und/oder partikelabweisende Eigenschaft durch Besprühen oder Beschichten, insbesondere Bedrucken, der Textil-Faserlage (6) insbesondere mit einer Silan-basierten Lösung aufgebracht ist.

7. Profil (1) nach einem der vorstehenden Ansprüche, wobei die Faserlage (6) ein Lederfaserstoff ist, der einen Lederanteil im Bereich von 50 Gew.- % bis 85 Gew.-%, einen Binderanteil im Bereich von 7 Gew.-% bis 40 Gew.-% und ggf. einen Anteil von wenigstens einem Additiv, wie ein Pigment, von höchstens 10 Gew.-% aufweist, bezogen auf eine GesamtTrockenmasse der Faserlage (6).

8. Profil (1) nach Anspruch 7, wobei der Lederfaserstoff mit mindestens einer Pigmentierung versehen ist, welche mindestens ein lichtechtes Pigment umfasst.

9. Profil (1) nach einem der vorstehenden Ansprüche, wobei die Faserlage (6) eine Dicke von weniger als 1,0 mm, insbesondere eine Dicke im Bereich von 0,05 mm bis 0,5 mm, aufweist.

10. Profil (1) nach einem der vorstehenden Ansprüche, wobei eine mit dem Profil zu verbindende Verbindungsfläche der Faserlage (6) zumindest teilweise mit einem Lack (39) beschichtet ist.

11. Profil (1) nach Anspruch 10, wobei der Lack (39) Polyesterlack, Epoxidharzlack, Alkydharzlack, Akryllack, PU-Lack (39) und/oder eine PVDF-Beschichtung umfasst.

12. Profil (1) nach einem der vorstehenden Ansprüche, wobei der Klebstoff (33) ein insbesondere einkomponentiger Schmelzklebstoff, insbesondere auf PU-Basis, ist und/oder eine Schichtdicke größer als 60 g/m² beträgt, insbesondere im Bereich von 80 g/m² bis 100 g/m² liegt.

13. Verfahren zum Herstellen eines insbesondere nach einem der vorstehenden Ansprüche ausgebildeten Extrusionsprofils, bei dem mittels Extrusion, insbesondere mittels Ko-Extrusion, ein Extrusionshalbzeug (3) hergestellt wird und mittels eines Klebstoffs (33) zumindest teilweise auf eine Außenseite des Extrusionshalbzeugs (3) eine Faserlage (6) aufkaschiert wird.

14. Tür- und/oder Fensterteil, insbesondere Tür- und/oder Fensterrahmenteil oder Tür- und/oder Fensterflügelteil, umfassend ein nach einem der Ansprüche 1 bis 12 ausgebildetes Profil (1) oder ein durch das Verfahren gemäß Anspruch 13 hergestelltes Profil (1).
